# EUROPÄISCHE PATENTSCHRIFT

(11) **EP 1 668 836 B1**
(45) Veröffentlichungstag und Bekanntmachung des Hinweises auf die Patenterteilung: **25.03.2009**
(21) Anmeldenummer: 04787256.9
(22) Anmeldetag: 30.09.2004
(51) Int. Cl.: H04L 12/28, H04W 4/00

(54) **VERFAHREN ZUR STEUERUNG EINER VERBINDUNGSÜBERGABE ZWISCHEN ZWEI NETZZUGANGSEINRICHTUNGEN**
METHOD FOR CONTROLLING A HANDOVER BETWEEN TWO NETWORK ACCESS DEVICES
PROCEDE POUR COMMANDER UN TRANSFERT ENTRE DEUX DISPOSITIFS D'ACCES A UN RESEAU

(30) Priorität: 30.09.2003 DE 10345528
(43) Veröffentlichungstag der Anmeldung: 14.06.2006
(73) Patentinhaber: Nokia Siemens Networks GmbH & Co. KG, 81541 München (DE)
(72) Erfinder: AUST, Stefan, Soraku-gun, Kyoto 619-0224 (JP); FIKOURAS, Nikolaus, Albert, 27729 Hambergen (DE); GÖRG, Carmelita, 28357 Bremen (DE); PAMPU, Cornel, 13437 Berlin (DE); PROETEL, Daniel, 28357 Bremen (DE)
(86) Internationale Anmeldenummer: PCT/EP2004/052369
(87) Internationale Veröffentlichungsnummer: WO 2005/034431

(56) Entgegenhaltungen:
- AUST S ET AL: "Design issues of mobile IP handoffs between general packet radio service GPRS) networks and wireless LAN (WLAN) systems" IEEE PUBLICATIONS, Bd. 2, 27. Oktober 2002 (2002-10-27), Seiten 868-872, XP010619215 in der Anmeldung erwähnt

## Beschreibung

Die Erfindung betrifft ein Verfahren zur Steuerung einer Verbindungsübergabe zwischen zwei Netzzugangseinrichtungen, insbesondere zwischen zwei Funk-Kommunikationssystemen.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmer-Endgeräten, wobei die Teilnehmer-Endgeräte Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Weiterbildungen basierend auf dem GSM-System, unter den Begriffen GPRS oder EDGE bekannt, zur Übertragung von höheren Datenraten werden als 2,5te Generation bezeichnet. Funk-Kommunikationssysteme, wie beispielsweise UMTS (Universal Mobile Telecommunication System) oder andere Systeme der dritten Generation sind im Vergleich zur zweiten Generation für noch höhere Datenraten ausgelegt. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in unterschiedlichen Frequenzbändern Anwendung, wobei sie jeweils ein so genanntes CDMA-Teilnehmerseparierungsverfahren (Code Division Multiple Access) unterstützen.

Eine Kombination von bekannten WLAN- (Wireless Local Area Network) Infrastrukturen und vorangehend beschriebenen zellularen Mobilfunksystemen ermöglicht Nutzern von mobilen Endgeräten einen Wechsel von aktiven Verbindungen zwischen diesen drahtlosen Zugangssystemen. Dies wird durch Mobilitätsprotokolle, wie beispielsweise dem so genannten Mobile-IPv4 und Mobile-IPv6, unterstützt. Das Mobile Internet Protocol (MIP) ermöglicht dabei, dass ein mobiles Endgerät bei einem Wechsel von einem zu einem anderen drahtlosen System eine zugeordnete IP-Adresse beibehalten kann, und somit unabhängig von dem System, über das es aktuell angebunden ist, direkt über diese IP-Adresse ansprechbar ist. Dieses Protokoll ist unter anderem detailiert in C.E. Perkins "IP Mobility Support", Request for Comments (Proposed Standard) 2002, Internet Engineering Task Force (IETF), October 1996, beschrieben.

In S. Aust, D. Proetel, A. Könsgen, C. Pampu, C. Görg "Design Issues of Mobile IP Handoffs between General Packet Radio Service (GPRS) Networks and Wireless LAN (WLAN) Systems", WPMC 2002, Honolulu, Hawaii (USA), October 2002, sind prinzipielle Herangehensweisen bei einer Verbindungsweiterschaltung zwischen derart heterogenen Systemen beschrieben. Insbesondere wird darin das Problem diskutiert, dass bei einer Verbindungsübergabe zwischen WLAN- und zellularen Mobilfunk-Systemen nachteilig in Folge undefinierter Übergaben Datenverluste und Verbindungsunterbrechungen auftreten können. Derartige Verluste und Unterbrechungen sind insbesondere auf Situationen zurückzuführen, in denen sich das mobile Endgerät in einem Randbereich einer WLAN-Abdeckung befindet und eine Übergabe auf ein zellulares System durchführen könnte. In diesem Fall kann jedoch beispielsweise in Folge undefinierter bzw. unzureichend definierter Schwellwerte bei der mit dem Mobile-IP-Protokoll gesteuerten Verbindungsübergabe ein so genannter Ping-Pong-Effekt auftreten, bei dem eine Verbindung wiederholt zwischen den zwei Zugangssystemen übergeben wird.

Der Ping-Pong-Effekt ist beispielsweise ein Ergebnis der Tatsache, dass so genannte Mobile Agent Advertisements, die eine Mobilitätserkennung des mobilen Endgerätes unterstützen, im Randgebiet einer WLAN Abdeckung aufgrund der sich verschlechternden Übertragungsbedingungen nur noch sporadisch bzw. unregelmäßig von einem mobilen Endgerät empfangen werden können.

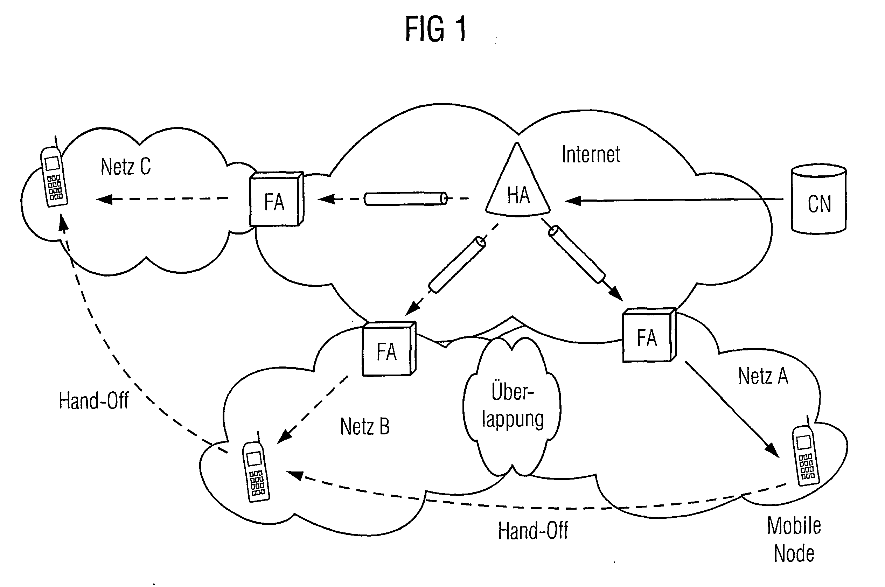

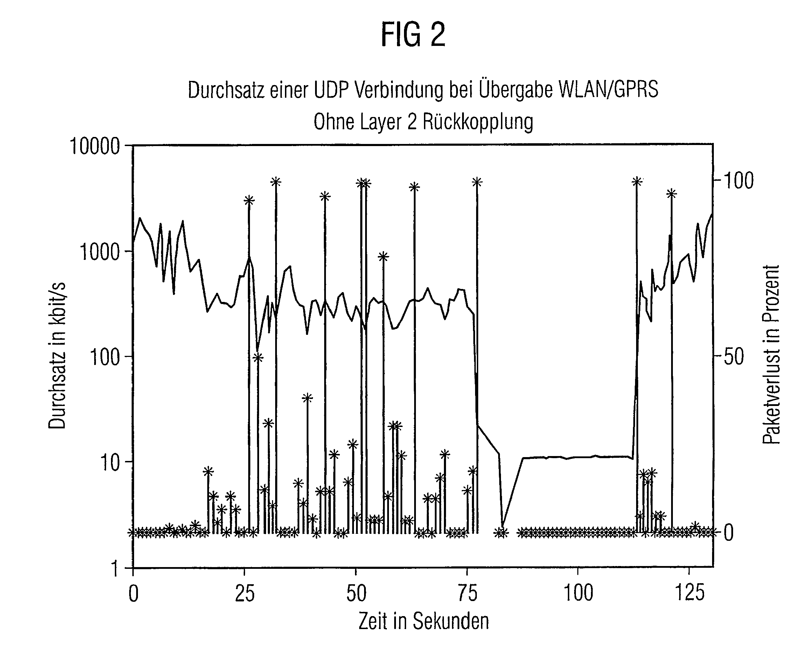

FIG 1 zeigt, bezugnehmend auf Figuren 1 und 2 sowie zugehöriger Beschreibung des vorgenannten Artikels von S. Aust et al, beispielhaft eine Mobile-IP-Übergabe (Hand-Off) zwischen Netz A, Netz B und Netz C. Es sei angenommen, dass die Netze A und C jeweils ein WLAN-System, und Netz B ein zellulares System, beispielsweise gemäß dem GPRS-Standard, unterstützen. Eine Übertragung von Daten erfolgt nach der Systemarchitektur des Mobile-IP von einem so genannten Correspondent Node (CN) als Datenquelle über einen so genannten Home Agent (HA) und, sofern sich das mobile Endgerät (Mobile Node) nicht im Versorgungsbereich des Home Agents befindet, zumindest einen so genannten Foreign Agent (FA) zu dem mobilen Endgerät als Datensenke bzw. in umgekehrter Richtung. Die Foreign Agents (FA) sind abhängig von dem jeweiligen System jeweils mit Access Points, die so genannte Hot Spots per WLAN versorgen, oder über weitere eine Paketdatenübertragung unterstützende Netzkomponenten mit Basisstationen zellularer Systeme verbunden.

Es sei ferner angenommen, dass in dem Beispiel der FIG 1 Netz A ein WLAN-basiertes Zugangssystem darstellt, und sich das mobile Endgerät zunächst in einem Hot Spot eines Access Points dieses Systems befindet und über den Access Point Daten in einer aktiven Verbindung empfängt. Netz B hingegen ist ein GPRS-basiertes zellulares Zugangssystem, wobei mittels einer Anzahl von Basisstationen Funkzellen mit funktechnischen Ressourcen versorgt werden. Netz C stellt wiederum ein WLAN-basiertes Zugangssystem dar.

Bewegt sich das mobile Endgerät in Richtung einer Grenze des Funkversorgungsbereiches des Netz A, so kommt es aufgrund der sich verschlechternden Übertragungseigenschaften der Funkschnittstelle zwischen dem Access Point des Netz A und dem mobilen Endgerät zu Störungen des Empfangs der von dem Foreign Agent (FA) des Netz A periodisch ausgesendeten Mobile-IP-Advertisments. Befindet sich das mobile Endgerät in einem Überlappungsbereich der Netze A und B, sodass es auch Signale einer Basisstation des Netzes B empfangen kann, so steuert es eine vertikale Verbindungsübergabe von Netz A zu Netz B, wenn die Übertragungseigenschaften zu dem Netz B günstiger als die zum Netz A sind. Nach erfolgter Verbindungsübergabe empfängt das mobile Endgerät nunmehr über den Foreign Agent (FA) des Netzes B entsprechende Mobile-IP-Advertisements. Während der Verbindungsübergabe ist das mobile Endgerät jedoch nachteilig nicht in der Lage, Datenpakete von einem der an der Verbindungsübergabe beteiligten Systemen zu empfangen, sodass es zu Verlusten von Datenpaketen sowie gegebenenfalls starken Verzögerungen bei der Übertragung von Datenpaketen kommen kann.

Insbesondere in Situationen, in denen sich das mobile Endgerät in einem Überlappungsbereich zweier Netze befindet, kann es in Folge unzureichend definierter Schwellwerte zu oben beschriebenem Ping-Pong-Effekt kommen, bei dem die Verbindung zwischen den beiden Netzen hin- und hergeschaltet wird, und das mobile Endgerät Mobile-IP-Advertisements von beiden jeweils zuständigen Foreign Agents (FA) empfängt. Ein derartiges Szenario kann sowohl bei Mobile-IP-basierten Verbindungsübergaben zwischen WLAN/WLAN-Systemen, so genannte homogene Systeme, als auch zwischen heterogenen Netzen, wie beispielsweise den Kombinationen WLAN/GPRS, WLAN/UMTS und GPRS/UMTS, auftreten.

Eine definierte Übergabe einer Verbindung zwischen beispielsweise einem WLAN- und einem zellularen System ist jedoch erforderlich, um Datenpaketverluste bzw. einen Empfang von Datenpaketen in einer falschen Reihenfolge aufgrund von aufeinanderfolgenden oder undefinierten Übergaben zu vermeiden, da dies insbesondere bei Multimedia-Anwendungen zu einer fehlerhaften Darstellung von beispielsweise Audio- oder Videodaten führen kann. Verlust von Datenpaketen in Folge undefinierter Übergaben ist beispielhaft in FIG 2 dargestellt.

FIG 2 zeigt Messungen von Mobile-IP-basierten Verbindungsübergaben zwischen einem WLAN- und einem GPRS-System. Zu Beginn der Messungen ist das sich mit einer Geschwindigkeit zwischen 0,2 und 0,5m/s bewegende mobile Endgerät mit der WLAN-Infrastruktur verbunden, welches an einem hohen Datendurchsatz infolge der in einem WLAN-System möglichen maximalen Datenrate von 11Mbit/s erkennbar ist (durchgezogene Linie). Nach ca. 25 Sekunden bewegt sich das mobile Endgerät langsam aus dem Versorgungsbereich des WLAN-Systems heraus, wobei die Signalstärke der von dem WLAN-System empfangenen Signale geringer wird. Aufgrund dieser geringer werdenden Signalstärke werden Advertisements des WLAN-Systems von dem mobilen Endgerät nur noch sporadisch empfangen, was wiederum zu mehrfachen Übergaben der Verbindung zwischen dem WLAN- und dem GPRS-System führt. Die mehrfachen Übergaben führen hierbei zu sehr hohen Datenpaketverlusten (jeweils als Stern gekennzeichnet), die in dem Zeitraum zwischen 25 Sekunden und 75 Sekunden zu beobachten sind. Nach ca. 75 Sekunden hat das mobile Endgerät die WLAN-Abdeckung vollständig verlassen. Es kommt zu einer längerfristigen Übergabe der Verbindung zu dem GPRS-System, erkennbar an der vergleichsweise niedrigen Datenrate.

Desweiteren ist in FIG 2 nach ca. 115 Sekunden erneut ein hoher Datenpaketverlust bei Rückkehr des mobilen Endgerätes in die WLAN-Abdeckung zu beobachten. Auch hier kommt es in Folge undefinierter Mobile-IP-Übergaben zu Verlusten von empfangenen Datenpaketen, die bis ca. 125 Sekunden zu erkennen sind. Innerhalb der Anbindung zu dem GPRS-System und bei ausreichender Signalstärke innerhalb der WLAN-Abdeckung sind dahingegen keine oder nur vergleichsweise geringe Verluste an Datenpaketen infolge von beispielsweise Streuung oder Reflexionen zu beobachten.

Das Problem undefinierter Verbindungsübergaben wurde in dem Kapitel "Design of vertical Mobile IP handoff requirements" des vorgenannten Artikels von S. Aust et al bereits erkannt und beschrieben. Als Lösungsansatz wird hierin vorgeschlagen, eine Hysterese mit zwei Schwellwerten zu definieren, wobei ein unterer Schwellwert eine nicht ausreichende Signalstärke für die Datenübertragung von einem Access Point definiert, und ein Unterschreiten dieses unteren Schwellwertes eine vertikale Verbindungsübergabe zu einem GPRS-Netzwerk auslöst, wobei das mobile Endgerät während der Übergabe Advertisements des WLAN-Systems unterdrückt. Ein oberer Schwellwert hingegen bezeichnet eine ausreichende Signalstärke, bei dessen Überschreiten das mobile Endgerät eine Verbindungsübergabe von dem GPRS-Netzwerk zu dem WLAN-System auslöst.

Trotz der beschriebenen Definition einer Hysterese zur Steuerung einer Verbindungsübergabe zwischen zwei Systemen und der damit einhergehenden Vermeidung mehrfacher Übergaben nimmt die Verbindungsübergabe einen großen Zeitraum in Anspruch, in dem nachteilig Verluste von Datenpaketen auftreten können.

Aufgabe der Erfindung ist es daher, ein Verfahren und ein Teilnehmer-Endgerät anzugeben, dass eine Mobile-IP-basierte Verbindungsübergabe zwischen zwei Systemen beschleunigt. Diese Aufgabe wird durch das Verfahren sowie das Teilnehmer-Endgerät gemäß den Merkmalen der unabhängigen Patentansprüche gelöst. Vorteilhafte Weiterbildungen der Erfindung sind abhängigen Patentansprüchen entnehmbar.

Erfindungsgemäß wird ein Verfahren zur Steuerung einer Verbindungsübergabe zwischen zwei Netzzugangseinrichtungen vorgeschlagen, bei dem die Verbindungsübergabe abhängig von zumindest einem in einer Verbindungsschicht auf Basis von Signalübertragungen auf einer physikalischen Schicht bestimmten Qualitätsparameter durchgeführt wird, wobei zur Entscheidung über die Übergabe eine Mobilität steuernde Mechanismen einer Netzwerkschicht genutzt werden. Gekennzeichnet ist das erfindungsgemäße Verfahren dadurch, dass abhängig von dem zumindest einen bestimmten Qualitätsparameter eine Weitergabe zumindest einer von einer aktuell versorgenden Netzzugangseinrichtung empfangenen Nachricht von der physikalischen Schicht zu der Netzwerkschicht durchgeführt oder unterdrückt wird.

Wie einleitend beschrieben, führt ein mobiles Endgerät im Kontext einer Mobile-IP-basierten Übertragung eine Verbindungsübergabe durch, wenn es zu Störungen bei dem Empfang von Nachrichten, den so genannten Advertisements, des aktuell versorgenden Systems, beispielsweise aufgrund von sich verschlechternden Übertragungsbedingungen auf der Funkschnittstelle, kommt. Das erfindungsgemäße Merkmal ermöglicht vorteilhaft eine Beschleunigung der Verbindungsübergabe durch eine bedingte Unterdrückung der Weitergabe von auf der physikalischen Schicht empfangenen Nachrichten an die übergeordnete Netzwerkschicht. Die Unterdrückung der Weitergabe erfolgt dabei basierend auf Messungen der physikalischen Schicht bezüglich einer Übertragungsqualität der aktuellen Verbindung. Da die die Mobilität des mobilen Endgerätes steuernde Netzwerkschicht aufgrund der Unterdrückung keine vorgenannten Nachrichten mehr empfängt, steuert sie unverzüglich eine Verbindungsübergabe zu einer zweiten Netzzugangseinrichtung. Vorteilhaft wird durch die beschleunigte Entscheidung und Durchführung einer Verbindungsübergabe ein möglicher Verlust des Empfangs von Datenpaketen verringert.

Gemäß einer alternativen Ausführungsform der Erfindung wird wiederum abhängig von dem zumindest einen bestimmten Qualitätsparameter ein Einfügen zumindest einer Nachricht zur Weitegabe an die Netzwerkschicht durchgeführt. Diese Ausgestaltung besitzt den Vorteil, dass eine Initialisierung einer Verbindungsübergabe aufgrund beispielsweise nur kurzzeitigen Störungen vermieden werden kann, und damit die Häufigkeit von Verbindungsübergaben einhergehend mit einem verringerten Verlust von Daten während dieser Übergaben verringert werden kann.

Gemäß einer ersten Weiterbildung der Erfindung wird die Entscheidung über die Weitergabe oder das Einfügen der zumindest einen Nachricht in einer zwischen der Verbindungsschicht und der Netzwerkschicht angeordneten Zwischenschicht getroffen. Die Definition einer derartigen Zwischenschicht besitzt den Vorteil, dass bestehende Standards, beispielsweise der einleitend beschriebene Mobile-IP-Standard, nicht verändert werden muss und somit in einfacher Weise eine Implementierung des erfindungsgemäßen Verfahrens ermöglicht wird.

Einer weiteren Ausgestaltung der Erfindung zufolge wird die Entscheidung aufgrund eines Vergleichs des zumindest einen bestimmten Qualitätsparameters mit zumindest einem vorgegebenen Schwellwert getroffen. Ein deratiger Vergleich besitzt den Vorteil, dass genaue Bedingungen definiert werden können, deren Erfüllung Voraussetzung für das Unterdrücken bzw. das Einfügen von Nachrichten ist.

Besonders vorteilhaft wird nach einer auf der vorhergehenden Ausgestaltung basierenden Weiterbildung der Erfindung der zumindest eine Schwellwert individuell für die Netzzugangseinrichtungen definiert. Hierbei kann insbesondere vorteilhaft der von der Einrichtung unterstützte Funk-Übertragungsstandard berücksichtigt werden, da diese aufgrund einer Nutzung beispielsweise unterschiedlicher Frequenzbänder oder Kodierungen zu unterschiedlichen Qualitätsparametern führen können.

Gemäß zweier weiterer Weiterbildungen werden bei der Steuerung der Verbindungsübergabe zusätzliche Bedingungen berücksichtigt. Demgemäß kann es zur Vermeidung des erhöhten Verlustes von Daten sinnvoll sein, nach einer Verbindungsübergabe erst ein bestimmtes Zeitintervall zu warten, bevor eine erneute Verbindungsübergabe durchgeführt wird. Alternativ oder ergänzend hierzu kann dies anhand von empfangenen Nachrichten bemessen werden, wobei erst nach Überschreiten einer bestimmten Anzahl empfangener Nachrichten eine Verbindungsübergabe ermöglicht wird. Diese zusätzlichen Parameter können vorteilhaft in die Funktionalität der Zwischenschicht verwirklicht werden.

Nachfolgend wird die Erfindung anhand von Ausführungsbeispielen näher erläutert. Es zeigen dabei
- FIG 1: beispielhafte Mobile-IP-basierte Verbindungsüberga- ben zwischen unterschiedlichen Zugangsnetzen,
- FIG 2: Beispielmessungen von Datenpaketverlusten bei Verbindungsübergaben zwischen WLAN- und GPRS-Syste- men,
- FIG 3: ein Schichtenmodell mit einer beispielhaften Integration von POLIMAND,
- FIG 4: eine Steuerung der Unterdrückung von Nachrichten durch POLIMAND, und
- FIG 5: die Beispielmessungen der FIG 2 unter Nutzung von POLIMAND.

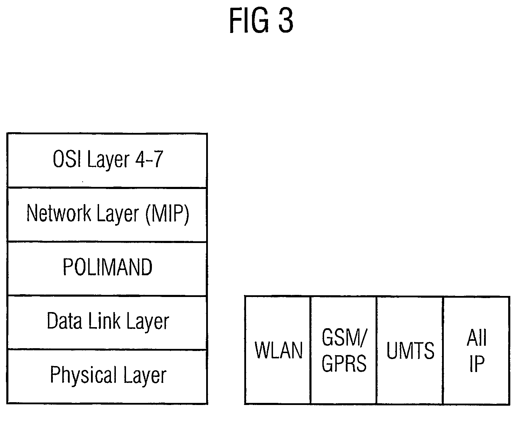

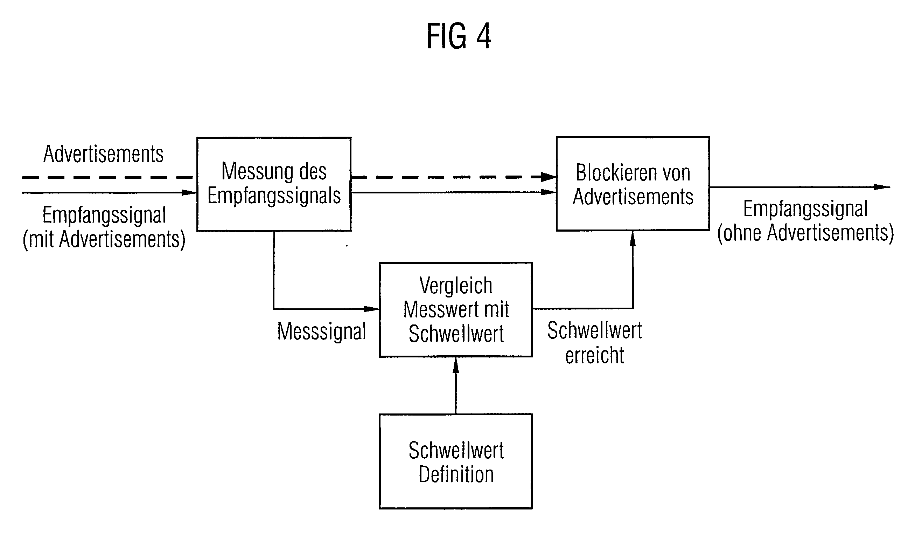

Bezugnehmend auf die FIG 3 und 4 wird nachfolgend eine Realisierung des erfindungsgemäßen Verfahrens in einem mobilen Teilnehmer-Endgerät beschrieben.

Die FIG 3 zeigt beispielhaft ein bekanntes OSI-Schichtenmodell, wie es in der Telekommunikationstechnik zur Definition unterschiedlicher Schichten verwendet wird. Auf einer untersten Schicht, der so genannten physikalischen Schicht Physical Layer, auch Schicht 1 genannt, erfolgt eine Übertragung von Signalen über ein Übertragungsmedium, beispielsweise ist hierunter die Funkschnittsstelle zu verstehen. Die Struktur der physikalischen Schicht ist abhängig von dem jeweils genutzten Standard, beispielsweise gemäß den genannten Standards WLAN bzw. 802.11, GSM/GPRS, UMTS etc., definiert.

Auf einer übergeordneten Schicht, der so genannten Verbindungsschicht Data Link Layer, erfolgt eine Steuerung der Verbindung. Zu dieser Steuerung gehört auch eine Analyse bzw. ein Bestimmen von aktuellen Übertragungseigenschaften bzw. Qualitätsparametern der physikalischen Schicht Physical Layer, um Verbindungsparameter entsprechend den aktuellen Übertragungseigenschaften anzupassen. Übertragungseigenschaften können beispielsweise in Form eines Signal-zu-Rausch-Verhältnisses (engl. SNR - Signal to Noise Ratio), einer Signalstärke, einer Rauschleistung, einer Bandbreite, einer Verzögerung (engl. Latency) oder einer Bit- bzw. Rahmenfehlerrate bzw. weiterer Dienstqualitätsparameter (engl. QoS - Quality of Service) des empfangenen Signals bestimmt werden.

Ausgehend von dem einleitend beschriebenen Beispiel der FIG 1 können bei einem WLAN-System die bekannten Parameter Quality Link, Quality Level (Qualitätswert) und/oder Noise Level (Rauschwert) zur Beurteilung der aktuellen Übertragungsparameter verwendet werden, wobei der Parameter Quality Link eine Kombination der beiden anderen Parameter darstellt, und somit Informationen über eine aktuelle Signalstärke und Rauschleistung enthält.

Insbesondere im Hinblick auf eine Anwendung des erfindungsgemäßen Verfahrens in unterschiedlichen Systemen ist die Verwendung einheitlicher Parameter vorteilhaft. Dies kann auch in Form einer Kombination mehrerer oben genannter Parameter zur Definition eines optimalen Entscheidungskriteriums zur Steuerung einer Verbindungsübergabe erfolgen. Insbesondere gilt dies für zukünftige so genannte Generic-Link-Layer-Standards (GLL) zu, in denen unterschiedliche Zugangssysteme einheitliche Netzwerkparameter verwendet werden.

Um eine Verbindungsweiterschaltung zwischen Zugangsnetzen, die unterschiedliche Übertragungsstandards unterstützen, zu ermöglichen, ist es sinnvoll, einen in den unterstützten Netzen, beispielsweise Netzen basierend auf den angegebenen Standards WLAN, GSM/GPRS, UMTS oder rein IP-basiert All IP, bestimmbaren Qualitätsparameter auszuwählen. In dem nachfolgend beschriebenen Beispiel wird als ein derartiger Qualitätsparameter ein Signal-zu-Stör/Rausch-Verhältnis genutzt.

Der Verbindungsschicht Data Link Layer übergeordnet ist eine erfindungsgemäße Zwischenschicht, die im folgenden als POLIMAND (Policy based Mobile IP Handoff Decision) bezeichnet wird. Diese Zwischenschicht entscheidet, wie nachfolgend noch ausführlicher erläutert wird, in Abhängigkeit von auf der Verbindungsschicht bestimmten Qualitätsparametern entsprechend vorangehender Beschreibung, ob auf der physikalischen Schicht Physical Layer empfangene Nachrichten zu einer Netzwerkschicht Network Layer weitergegeben werden oder nicht.

Auf der Netzwerkschicht Network Layer, auch als Schicht 3 bezeichnet, wiederum erfolgt die Steuerung der Verbindungsübergabe basierend auf dem Mobile Internet Protokoll MIP nach bekannten Mechanismen. Alternativ zu dem genannten Mobile-IP können in gleicher Weise weitere Ausführungen des Standards, beispielsweise das so genannte Hierarchical Mobile IP (HMIP) oder das so genannte Fast Mobile IP (FHMIP), eingesetzt werden. Der Netzwerkschicht Network Layer sind weitere Schichten Layer entsprechend dem OSI-Schichtenmodell übergeordnet, die jedoch inhaltlich nicht betrachtet werden.

In der FIG 4 ist beispielhaft ein Ablaufdiagramm der Funktionsweise der POLIMAND-Zwischenschicht in Verbindung mit den beschriebenen darüber und darunter liegenden Schichten bei einer Implementierung in einem Teilnehmer-Endgerät in der beschriebenen Situation der FIG 1 dargestellt.

Das Teilnehmer-Endgerät empfängt über die Funkschnittstelle gesendete Signale eines WLAN-Access Points des Netz A der FIG 1, wobei das Empfangsignal auch Nachrichten, die so genannten Mobility Agent Advertisements des Mobile-IP, beinhalten. Der Signalfluss der Nachrichten Advertisements ist durch eine gestrichelte Linie dargestellt. Aus einer Messung des Empfangssignals wird ein Messsignal als eine Eingangsgröße für einen anschließenden Vergleich mit einem Schwellwert bestimmt. Wie vorangehend beschrieben, stellt das Messsignal beispielhaft ein Signal-zu-Stör/Rausch-Verhältnis als Qualitätsparameter dar, welches Aufschluss über die aktuelle Signalqualität gibt. Wird die gemessene Signalqualität schlechter, so ist eine Verbindungsübergabe von dem aktuelle versorgenden WLAN-System zu beispielsweise einem GPRS-System erforderlich. Besitzt das Empfangssignal hingegen eine ausreichende Signalqualität, so ist zunächst keine Verbindungsübergabe erforderlich.

Der bestimmte Qualitätsparameter als Messsignal wird mit einem Schwellwert verglichen. Der Schwellwert wird dabei beispielsweise abhängig von dem jeweiligen Übertragungsstandard definiert, um individuellen Unterschieden der verschiedenen Übertragungsverfahren Rechnung zu tragen. Die Schwellwerte können beispielsweise von dem jeweils aktuell versorgenden System definiert und zu dem Teilnehmer-Endgerät nach oder während eines Verbindungsaufbaus übertragen und in dem Teilnehmer-Endgerät gespeichert werden.

In dem dargestellten Fall wird der Qualitätsparameter mit einem definierten Schwellwert verglichen, der einen unteren Wert eines für eine Verbindung ausreichenden Signal-zu-Stör/Rausch-Verhältnisses darstellt. Bei Erreichen oder Unterschreiten dieses Schwellwertes sollte entsprechend vorangehender Beschreibung eine Verbindungsübergabe zu einem System mit günstigeren Übertragungseigenschaften durchgeführt werden.

Neben einem unteren Schwellwert für eine Verbindungsübergabe zu einem anderen System, beispielsweise zu dem GPRS-System des Netz B der FIG 1, ist weiterhin ein oberer Schwellwert definiert, bei dessen Erreichen oder Überschreitung eine Verbindungsübergabe von dem anderen System wieder zurück zu dem ursprünglichen System durchgeführt würde. Durch diese zwei Schwellwerte wird eine Hysterese definiert, die den vorangehend beschriebenen Ping-Pong-Effekt vermeidet sowie beispielsweise zusätzlich dafür sorgt, dass eine Verbindung für einen möglichst langen Zeitraum über das WLAN-System besteht, da dieses eine deutlich höhere Übertragungskapazität als das GPRS-System zur Verfügung stellt.

Erreicht oder Unterschreitet der bestimmte Qualitätsparameter bei dem Vergleich den definierten Schwellwert, so wird nachfolgend die Weitergabe der empfangenen Nachricht bzw. Nachrichten Advertisements an die Netzwerkschicht Network Layer bzw. dem Mobile-IP MIP unterdrückt bzw. blockiert. Es werden demnach nur die weiteren Empfangssignale ohne Nachrichten der übergeordneten Schicht übergeben (die gestrichelte Linie endet hier). Eine Implementierung dieser Unterdrückung bzw. Blockierung kann beispielsweise mittels eines Systemskriptes erfolgen. Ein entsprechendes Vorgehen würde bei Überschreiten des oberen Schwellwertes verwirklicht werden.

Durch die Unterdrückung bzw. Blockierung der Nachrichten Advertisements wird den für die Mobilität und die Verbindungsübergabe zuständigen Mobile-IP-Mechanismen bereits zu einem frühen Zeitpunkt suggeriert, dass sich die Übertragungseigenschaften verschlechtert haben und daher eine Verbindungsübergabe zu einem weiteren System erforderlich ist. Hierdurch wird das Ziel einer definierteren und beschleunigten Verbindungsübergabe erreicht, wodurch vorteilhaft ein Verlust an Datenpaketen aufgrund von Verbindungsübergaben minimiert wird.

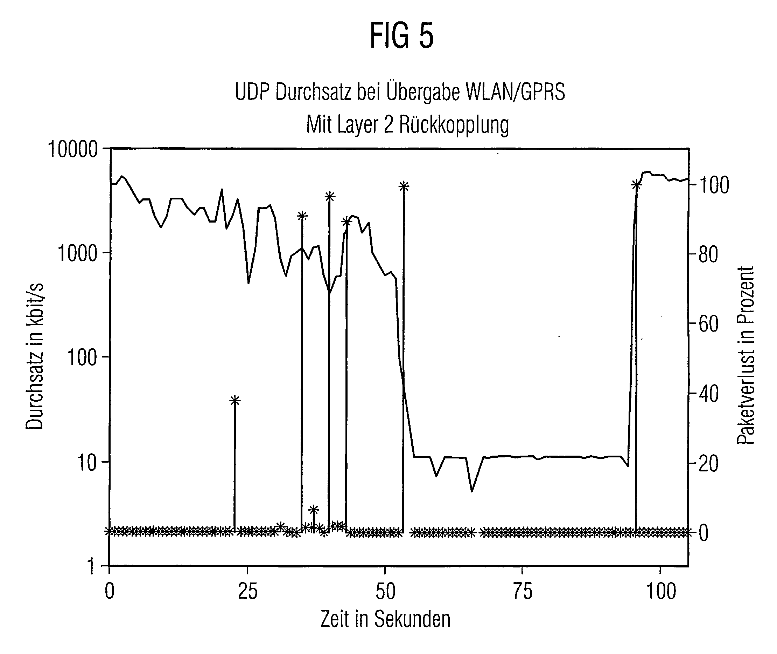

In FIG 5 ist nochmals das Beispiel der FIG 2 dargestellt, jedoch unter Nutzung der Beschriebenen Unterdrückung von Nachrichten, als Layer 2 Rückkopplung bezeichnet. Deutlich zu sehen ist, dass eine im Vergleich deutliche Verringerung des Paketdatenverlustes (durch Sternchen gekennzeichnet) aufgrund einer vorzeitigen Mobile-IP-basierten Verbindungsübergabe erzielt wird. Die Verbindungsübergabe zu dem GPRS-System erfolgt im Vergleich zu dem Beispiel der FIG 2 zeitlich früher, da basierend auf dem ermittelten Signal-zu-Rausch-Verhältnis ein vorgegebener Schwellwert erreicht wird, der die Zwischenschicht POLIMAND entsprechend dazu veranlasst, die Weitergabe von Nachrichten zu unterdrücken und somit eine Mobile-IP-basierte Verbindungsübergabe zu provozieren.

Ergänzend oder alternativ kann es sinnvoll sein, wenn seitens der Zwischenschicht POLIMAND bei der Weitergabe von Empfangssignalen Nachrichten eingefügt werden. Dies findet beispielsweise Anwendung, wenn von dem mobilen Endgerät aufgrund von beispielsweise kurzzeitigen Störungen der Übertragung über die Funkschnittstelle zwar keine Nachrichten empfangen werden, der bestimmte Qualitätsparameter jedoch auf eine ausreichende Übertragungsqualität für die Aufrechterhaltung einer Verbindung schließen lässt. Da ein Ausbleiben einer Nachricht Mechanismen zur Steuerung einer Verbindungsübergabe in dem Mobile-IP aktivieren könnte, wird durch das Einfügen der Nachrichten vorteilhaft die aktuelle Verbindung, die im Vergleich zu einem für die Verbindungsübergabe in Frage kommenden System beispielsweise eine weitaus höhere Übertragungsrate unterstützt, aufrecht erhalten.

## Patentansprüche

1. Verfahren zur Steuerung einer Verbindungsübergabe zwischen zwei Netzzugangseinrichtungen, bei dem
die Verbindungsübergabe abhängig von zumindest einem in einer Verbindungsschicht auf Basis von Signalübertragungen auf einer physikalischen Schicht bestimmten Qualitätsparameter durchgeführt wird, wobei zur Entscheidung über die Verbindungsübergabe eine Mobilität steuernde Mechanismen einer Netzwerkschicht genutzt werden,
**dadurch gekennzeichnet, dass**
abhängig von dem zumindest einen bestimmten Qualitätsparameter in Vorbereitung der Verbindungsübergabe eine Weitergabe zumindest einer von einer aktuell versorgenden Netzzugangseinrichtung empfangenen Nachricht von der physikalischen Schicht zu der Netzwerkschicht durchgeführt oder unterdrückt wird.

2. Verfahren nach Anspruch 1, bei dem
eine Entscheidung über die Weitergabe der zumindest einen Nachricht in einer zwischen der Verbindungsschicht und der die Mobilität steuernden Netzwerkschicht angeordneten Zwischenschicht getroffen wird.

3. Verfahren nach dem vorhergehenden Anspruch, bei dem
die Entscheidung aufgrund eines Vergleichs des zumindest einen bestimmten Qualitätsparameters mit zumindest einem vorgegebenen Schwellwert getroffen wird.

4. Verfahren nach dem vorhergehenden Anspruch, bei dem
der zumindest eine Schwellwert Netzzugangseinrichtungs-spezifisch definiert wird.

5. Verfahren nach einem vorhergehenden Anspruch, wobei
die Verbindungsübergabe zwischen Zugangseinrichtungen zweier auf der physikalischen Schicht unterschiedliche Standards unterstützenden Netzzugangseinrichtungen durchgeführt wird.

6. Verfahren nach einem vorhergehenden Anspruch, bei dem
die Verbindungsübergabe erst nach einem Ablauf eines vorgegebenen Zeitintervalls nach Abschluss einer vorhergehenden Verbindungsübergabe durchgeführt wird.

7. Verfahren nach einem vorhergehenden Anspruch, bei dem
die Verbindungsübergabe erst nach einem Überschreiten einer bestimmten Anzahl von empfangenen Nachrichten durchgeführt wird.

## Claims

1. Method for controlling a handover between two network access devices in which the handover is carried out in dependence on at least one quality parameter determined in a link layer on the basis of signal transmissions on a physical layer, wherein mechanisms of a network layer controlling a mobility are utilized for the decision about the handover, **characterized in that,** depending on the at least one determined quality parameter, in preparation for the handover, a forwarding from the physical layer to the network layer of at least one message received by a currently covering network access device is carried out or suppressed.

2. Method according to Claim 1, in which a decision about the forwarding of the at least one message is made in an intermediate layer arranged between the link layer and the network layer controlling the mobility.

3. Method according to the preceding claim, in which the decision is made on the basis of a comparison of the at least one determined quality parameter with at least one predetermined threshold value.

4. Method according to the preceding claim, in which the at least one threshold value is network-access-device-specifically defined.

5. Method according to a preceding claim, wherein the handover is carried out between access devices of two network access devices supporting different standards on the physical layer.

6. Method according to a preceding claim, in which the handover is only carried out after a predetermined time interval has elapsed after the conclusion of a preceding handover.

7. Method according to a preceding claim, in which the handover is only carried out after a particular number of received messages has been exceeded.

## Revendications

1. Procédé pour commander un transfert de liaison entre deux dispositifs d'accès réseau, dans lequel le transfert de liaison est effectué en fonction d'au moins un paramètre de qualité déterminé dans une couche de liaison sur la base de transmissions de signaux sur une couche physique, des mécanismes d'une couche de réseau qui commandent une mobilité étant utilisés aux fins de la décision relative au transfert de la liaison, **caractérisé en ce que,** en fonction de l'au moins un paramètre de qualité déterminé, en préparation du transfert de liaison, un transfert, de la couche physique vers la couche de réseau, d'au moins un message reçu d'un dispositif d'accès réseau actuellement en train d'assurer la desserte est effectué ou empêché.

2. Procédé selon la revendication 1, dans lequel est prise une décision relative au transfert de l'au moins un message dans une couche intermédiaire située entre la couche de liaison et la couche de réseau qui commande la mobilité.

3. Procédé selon la revendication précédente, dans lequel la décision est prise sur la base d'une comparaison entre l'au moins un paramètre de qualité déterminé et au moins une valeur seuil prédéterminée.

4. Procédé selon la revendication précédente, dans lequel l'au moins une valeur seuil est définie de manière spécifique au dispositif d'accès réseau.

5. Procédé selon une revendication précédente, le transfert de liaison étant effectué entre des dispositifs d'accès de deux dispositifs d'accès réseau qui supportent des standards différents sur la couche physique.

6. Procédé selon une revendication précédente, dans lequel le transfert de liaison n'est effectué qu'après l'expiration d'un intervalle de temps prédéterminé après la fin d'un transfert de liaison précédent.

7. Procédé selon une revendication précédente, dans lequel le transfert de liaison n'est effectué qu'après un dépassement d'un nombre déterminé de messages reçus.
